# EUROPÄISCHE PATENTSCHRIFT

(11) **EP 0 714 357 B1**
(45) Veröffentlichungstag und Bekanntmachung des Hinweises auf die Patenterteilung: **10.06.1998**
(21) Anmeldenummer: 94924797.7
(22) Anmeldetag: 22.07.1994
(51) Int. Cl.: B60S 1/04, B62D 27/04

(54) **BEFESTIGUNGSMITTEL FÜR EINE SCHEIBENWISCHERANLAGE**
FIXTURE FOR WINDSHIELD WIPERS
ELEMENT DE FIXATION POUR ESSUIE-GLACES

(30) Priorität: 26.08.1993 DE 4328651
(43) Veröffentlichungstag der Anmeldung: 05.06.1996
(73) Patentinhaber: ITT Automotive Europe GmbH, 60488 Frankfurt am Main (DE)
(72) Erfinder: KARL, Helmut, D-74193 Schwaigern (DE); KRIZEK, Oldrich, D-74321 Bietigheim-Bissingen (DE); ORTALE, Alessandro, D-74243 Langenbrettach (DE); SCHMID, Eckhardt, D-74336 Brackenheim (DE)
(86) Internationale Anmeldenummer: EP9402427
(87) Internationale Veröffentlichungsnummer: WO9505959

(56) Entgegenhaltungen:
- EP-A- 0 382 346
- GB-A- 2 258 145

## Beschreibung

Die Erfindung bezieht sich auf Befestigungsmittel für eine Scheibenwischeranlage, welche eine geräuschdämpfende Befestigung von schwingungsbelasteten Teilen oder Elementen an einer Fahrzeugkarosserie oder Teilen davon bewirken.

Aus der DE-A-40 36 367 ist eine vormontierbare Wischeranlage bekannt, deren Motortragplatte und Wischlagergehäuse mit Befestigungsmitteln zur schwingungs- bzw. geräuschdämpfenden Befestigung an der Fahrzeugkarosserie ausgestattet sind. Die Wischlagergehäuse haben jeweils einen seitlichen Befestigungsfortsatz. In diese Befestigungsfortsätze und in die Motortragplatte ist eine Durchgangsbohrung eingebracht, in die ein hohlzylindrisches Dämpfungselement aus gummielastischem Material mit einer an seinem Außenumfang verlaufenden Ringnut eingeknöpft ist. Die Ringnut befindet sich etwa in der Körperlängsmitte des Dämpfungselementes. Mit die Dämpfungselemente durchgreifenden Schrauben ist die Scheibenwischeranlage an der karosserie zu befestigen.

Diese beschriebenen Befestigungsmittel haben den Nachteil, daß das Einknöpfen der Dämpfungselemente in die Durchgangsbohrungen ein sehr intensiver und aufwendiger Arbeitsgang ist.

Aus der DE-A-39 03 976 ist eine andere vormontierte Wischeranlage bekannt, die unter anderem ein als Druckgußteil hergestelltes Motortrageteil beinhaltet. An das Motortrageteil ist ein seitliches Befestigungsauge angeformt, welches an einer Seite derart gabelförmig geöffnet ist, daß ein gummielastisches Dämpfungselement der unter DE 40 36 367 A1 beschriebenen Art seitlich in die Öffnung eingeschoben werden kann. Die Gabelzungen laufen dabei mit ihren freien Enden etwas aufeinander zu, so daß das Dämpfungselement beim seitlichen Einschieben leicht zusammengedrückt wird und bei Erreichen seiner Aufnahmeöffnung wieder seine normale Ausgangsgestalt einnimmt. Durch die Ringnut am Außenumfang des Dämpfungselementes und die aufeinanderzulaufenden Gabelzungen wird das Dämpfungselement im Befestigungsauge gehalten.

Diese Lösung ermöglicht zwar eine einfache Montage des gummielastischen Dämpfungselementes, jedoch besteht ein anderer Nachteil. Beim Befestigen der Wischanlage an der Fahrzeugkarosserie wird das Dämpfungselement durch die hindurchgehende Schraubverbindung axial zusammengepreßt, wobei das Material des Dämpfungselementes radial auszuweichen versucht. Dadurch wird ein starker Druck radial auf die Gabelzungen des Befestigungsauges ausgeübt, der zum Auseinanderbiegen oder gar zum Bruch führen kann.

Eine weitere vorgefertigte Scheibenwischeranlage ist in der GB-A-2 218 622 A beschrieben. Hier ist an ein Wischlagergehäuse seitlich ein Befestigungsfortsatz angeformt, der gabelförmig geöffnet ist und ein Dämpfungselement der bereits beschriebenen Art durch seitliches Einschieben aufnehmen kann. Wie bereits zur DE-A-39 03 976 beschrieben, wirken auch hier ausgehend von der Axialpressung des Dämpfungselementes radiale Kräfte auf die Gabelteile, wodurch diese auseinandergebogen werden können oder sogar abbrechen.

Aufgabe der Erfindung ist es, geräusch- bzw. schwingungsdämpfende Befestigungsmittel für eine Scheibenwischeranlage zu entwickeln, die eine einfache Montage des gummielastischen Dämpfungselementes erlauben und andererseits die erforderliche Stabilität des Befestigungsauges gewährleisten.

Erfindungemäß wird die Aufgabe gelöst durch ein Befestigungsmittel mit den Merkmalen des Oberbegriffs des Anspruches 1 (Befestigungsmittel nach der GB-A-2 258 145 bzw. EP-A-0 382 346), bei welchem ein Steg, der mit beiden Gabelzungen des Befestigungsauges verbunden ist, die Gabelöffnung derart überbrückt, daß ein gummielastisches Dämpfungselement mit seiner Nut im Außenumfang seitlich durch die Gabelöffnung einschiebbar ist, bis es ordnungsgemäß in der Aufnahmeöffnung positioniert ist.

Der die Gabelöffnung überbrückende Steg verleiht dem Befestigungsauge die erforderliche Stabilität, die ein Aufbiegen oder Abbrechen der Gabelzungen verhindert. Durch das Überbrücken der Gabelöffnung wird das einfache seitliche Einschieben des Dämpfungselementes ermöglicht.

Wenn das Teil der Scheibenwischeranlage, welches am Fahrzeug zu befestigen ist, als Druckgußteil hergestellt ist, ist es vorteilhaft, daß das Befestigungsauge gemäß Anspruch 2 ebenfalls als Druckgußteil hergestellt und an das genannte Druckgußteil der Scheibenwischeranlage angeformt ist. Dieses Befestigungsauge ist topfförmig ausgebildet, wobei sich die Aufnahmeöffnung für das gummielastische Dämpfungselement im Topfboden befindet. Die von der Aufnahmeöffnung ausgehende Gabelöffnung erstreckt sich durch die Topfwand hindurch, so daß der die Gabelöffnung in der vorgesehenen Höhe überbrückende Steg von der verbleibenden Topfwand gebildet wird. Somit wird eine besonders gute Stabilität des gesamten Befestigungsauges erreicht, und das Dämpfungselement ist trotzdem in einfacher Weise seitlich durch die Gabelöffnung einschiebbar.

In einer anderen Ausführungsform gemäß Anspruch 3 ist das Befestigungsauge aus einem Blech hergestellt und mit dem betreffenden Teil der Scheibenwischeranlage est verbunden. Hierbei ist der Steg, welcher die beiden Gabelzungen uberbrückt, ehenfalls ein Blechteil. Dieses Blechteil kann annähernd U-förmig und jeweils mit der Stirnseite eines Schenkels auf einer Gabelzunge befestigt sein, so daß es etwa senkrecht von den Gabelzungen hochsteht.

Einfacher herstellbar ist ein Befestigungsauge, wenn der Steg gemäß Anspruch 4 einstückig mit dem Befestigungsauge ist und von einem Abschnitt des Bleches des Befestigungsauges gebildet ist, der aus der übrigen Blechebene hochgestellt ist.

Noch einfacher herstellbar ist ein Befestigungsauge, wenn gemäß Anspruch 5 der Steg von einem hochgestellten Rand des Bleches gebildet wird.

Anhand der Zeichnungen sind nachfolgend mehrere Ausführungsbeispiele näher beschrieben. Hierbei zeigen
- Figur 1: ein als Druckgußteil hergestelltes Gehäuse eines Wischlagers mit angeformtem topfförmigen Befestigungsauge in perspektivischer Darstellung,
- Figur 2: die Draufsicht auf das Wischlagergehäuse aus Figur 1,
- Figur 3: eine Seitenansicht des Wischlagergehäuses aus Figur 1 mit eingesetztem gummielastischem Dämpfungselement,
- Figur 4: ein als Blechteil hergestelltes Befestigungsauge für eine Scheibenwischeranlage in perspektivischer Darstellung,
- Figur 5: die Draufsicht auf das Befestigungsauge aus Figur 4,
- Figur 6: die Vorderansicht des Befestigungsauges aus Figur 5,
- Figur 7: die Seitenansicht des Befestigungsauges aus Figur 6 mit eingesetztem Dämpfungselement in Schnittdarstellung,
- Figur 8: eine Draufsicht auf eine andere Ausführungsform eines als Blechteil hergestellten Befestigungsauges und
- Figur 9: einen Schnitt entlang der Linie I-I durch das Befestigungsauge aus Figur 8 ohne Dämpfungselement.

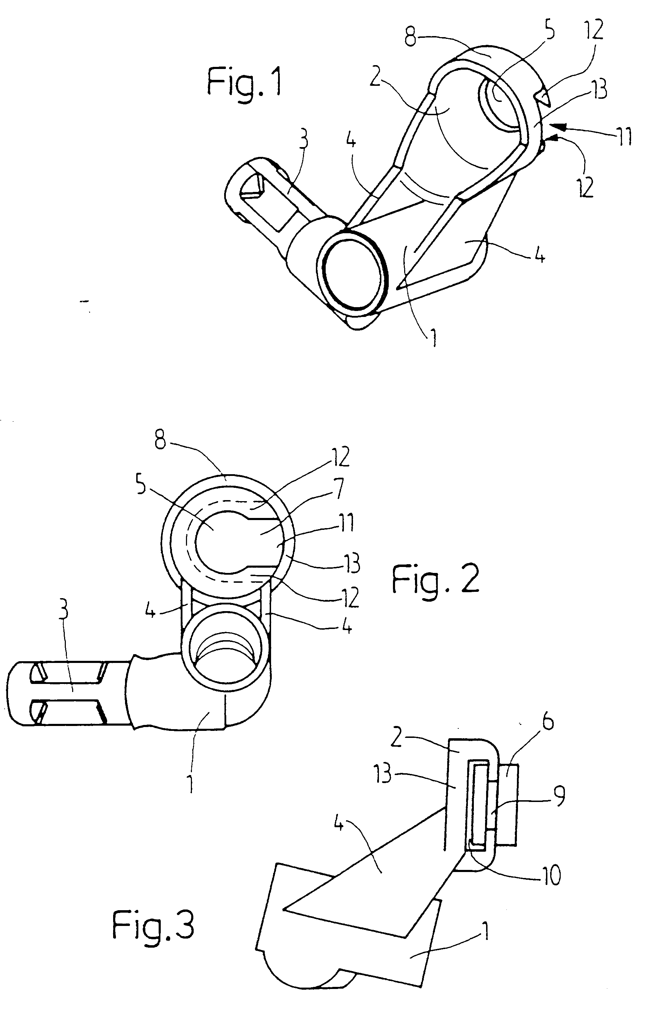

An das in den Figuren 1 bis 3 dargestellte, als Druckgußteil hergestellte Wischlagergehäuse 1 ist ein ebenfalls als Druckgußteil hergestelltes Befestigungsauge 2 einstückig angeformt. Das Wischlagergehäuse 1 hat einen angeformten Zapfen 3, über welchen das Wischlagergehäuse 1 und somit auch das Befestigungsauge 2 mit dem nicht dargestellten Rohrrahmen einer Scheibenwischeranlage zu verbinden ist. Das Befestigungsauge 2 ist mittels zweier Rippen 4 an dem Wischlagergehäuse 1 gehalten. Das Befestigungsauge 1 selbst besitzt eine annähernd topfförmige Gestalt, wobei in den Boden des Topfes eine kreisrunde Aufnahmeöffnung 5 für das gummielastische Dämpfungselement 6 eingebracht ist. Ein von dieser Aufnahmeöffnung 5 ausgehender Durchbruch 7 erstreckt sich bis durch die Topfwand 8 hindurch.

Der Durchmesser der Aufnahmeöffnung 5 entspricht dem Außendurchmesser des Dämpfungselementes 6 am Grund der in den Außenumfang des Dämpfungselementes 6 eingebrachten Ringnut 9. Der Durchbruch 7 ist schmaler als der Durchmesser der Aufnahmeöffnung 5 - dadurch wird das Dämpfungselement 6 verliersicher in der Aufnahmeöffnung 5 gehalten.

In dem Abschnitt der Topfwand 8, in welchen sich der Durchbruch 7 durch die Topfwand 8 hindurch erstreckt, befindet sich in der Topfwand 8 der Durchbruch 10. Dieser Durchbruch 10 ist etwa halb so hoch wie das Dämpfungselement 6, und die Breite des Durchbruchs 10 ist etwas größer als der Außendurchmesser des Dämpfungselementes 6. Der Durchbruch 7 und der Durchbruch 10 bilden gemeinsam die Gabelöffnung 11, welche von den Gabelzungen 12 eingeschlossen ist. Die Gabelzungen 12 werden von einem Steg 13 überbrückt, der von der verbliebenen Topfwand 8 im Abschnitt der Gabelöffnung 11 gebildet wird, wobei dieser Steg 13 einstückig mit den Gabelzungen 12 verbunden ist.

In das Befestigungsauge 2 ist ein in Figur 3 mit Strich-Punkt-Linien angedeutetes gummielastisches Element einsetzbar, welches ein hohlzylindrisches Teil mit einer umlaufenden Ringnut 9 in der Mantelfläche ist, wobei die Ringnut 9 etwa mittig angeordnet ist. Das Einsetzen des Dämpfungselementes 6 erfolgt durch seitliches Einschieben mit der Ringnut 9 durch die Gabelöffnung 11 bis in die Aufnahmeöffnung 5. Mit einer nicht dargestellten Schraube bzw. einem Gewindebolzen, der das Dämpfungselement 6 durchgreift wird das Befestigungsmittel und mit diesem die Scheibenwischeranlage an der Karosserie befestigt.

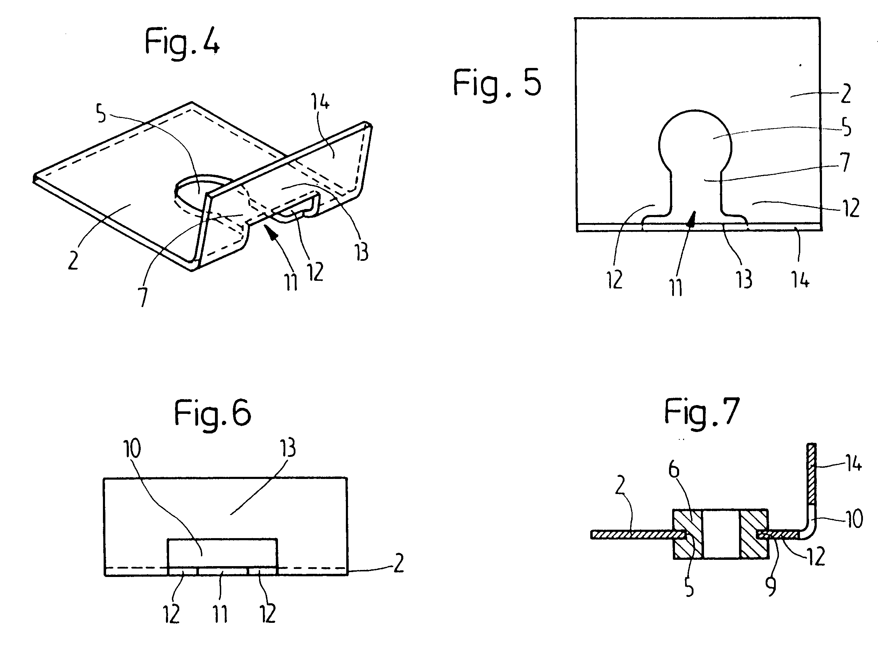

Ein anderes Ausführungsbeispiel ist in den Figuren 4 bis 7 dargestellt. Das Befestigungsauge 2 ist hier aus einer Blechplatte mit einem etwa senkrecht hochgestellten Rand 14 hergestellt. In die Grundfläche der Blechplatte ist eine kreisrunde Aufnahmeöffnung 5 für die Aufnahme eines gummielastischen Dämpfungselementes 6 eingebracht, wobei der Durchmesser der Aufnahmeöffnung 5 wiederum dem Außendurchmesser des Dämpfungselementes 6 entspricht, der vom Grund der umlaufenden Ringnut 9 gebildet wird.

Ausgehend von der Aufnahmeöffnung 5 erstreckt sich ein Durchbruch 7 bis durch den hochgestellten Rand 14 hindurch, wobei in den hochgestellten Rand 14 im Bereich der Mündung des Durchbruches 7 ein rechteckiger Durchbruch 10 eingebracht ist. Der Durchbruch 7 ist schmaler als der Durchmesser der Aufnahmeöffnung; der Durchbruch 10 ist höher als die halbe Höhe des Dämpfungselementes 6 und breiter als der größte Außendurchmesser des Dämpfungselementes 6. Die beiden Durchbrüche 7 und 10 bilden die Gabelöffnung, die von den Gabelzungen 12 flankiert wird. Der verbleibende Rest des hochgestellten Randes 14 bildet den etwa U-förmigen Steg 13, der die Gabelöffnung 11 überbrückt und aufgrund der einstückigen Befestigung an den Gabelzungen 12 für die gewünschte Stabilität des Befestigungsauges 2 sorgt.

Das Befestigungsauge 2 selbst ist mit einer Seite der Blechplatte, beispielsweise der dem hochgestellten Rand 14 gegenüberliegende Seite, mit einem Teil der Scheibenwischeranlage fest verbunden. So kann das Befestigungsauge 2 an einem nicht dargestellten Wischlagergehäuse befestigt oder einstückiges Teil einer nicht dargestellten Motortragplatte sein.

Ein gummielastisches Dämpfungselement 6 der bereits beschriebenen Art ist seitlich mit seiner Ringnut 9 durch die Gabelöffnung 11 so weit einschiebbar, bis es seine endgültige Position wie in Figur 7 dargestellt, einnimmt. Beim Überwinden des Durchbruches 7 wird das Dämpfungselement 2 etwas elastisch verformt, weil dieser Durchbruch 7 schmaler ist als der Außendurchmesser des Dämpfungselements 6 am Grunde der Ringnut 9. In der Aufnahmeöffnung 5 kann das Dämpfungselement 6 wieder seine Ausgangsform annehmen und somit gewissermaßen in der Aufnahmeöffnong verrasten, wodurch eine Selbsthaltung erfolgt.

Mittels Schrauben oder Gewindebolzen oder ähnlichen geeigneten Mitteln, die die Bohrung des Dämpfungselementes 6 durchgreifen, ist die Scheibenwischeranlage an einer Fahrzeugkarosserie zu befestigen.

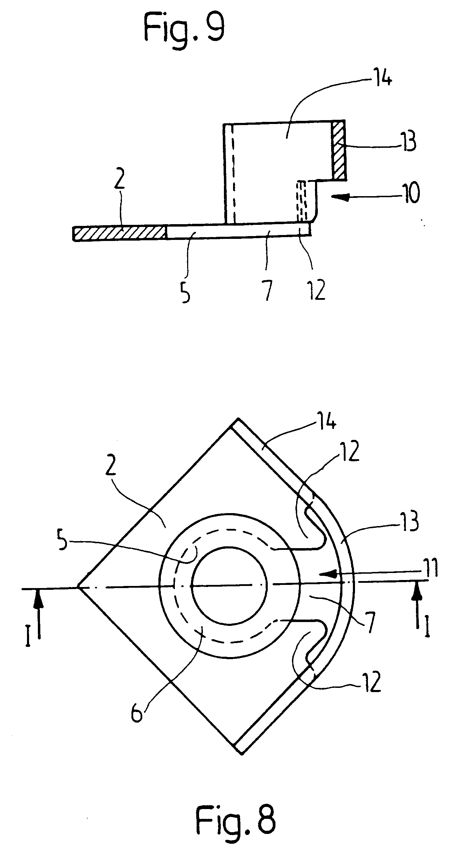

Ein letztes Ausführungsbeispiel ist in den Figuren 8 und 9 dargestellt. Das hier dargestellte Befestigungsauge 2 ist wiederum aus Blech hergestellt, wobei die eigentliche Blechplatte einen kreisbogenförmigen Abschnitt besitzt, der beiderseits tangential fortgesetzt wird. In diesem kreisbogenförmigen Abschnitt und den tangential angrenzenden Seiten ist der Rand 14 des Bleches wiederum rechtwinklig hochgestellt, was beispielsweise durch Tiefziehen erfolgt sein kann. In der Grundfläche des Befestigungsauges 2 ist wieder die Aufnahmeöffnung 5 für das nicht dargestellte Dämpfungselement 6 eingebracht, von wo aus sich der Durchbruch 7 auf die Mitte des kreisbogenförmigen Abschnittes des Randes 14 und dort durch diesen hindurch erstreckt. Im Bereich der Mündung des Durchbruches 7 befindet sich der Durchbruch 10 in dem hochgestellten Rand 14, um das seitliche Einschieben des Dämpfungselementes 6 bis in die Aufnahmeöffnung 5 zu ermöglichen.

Der von dem hochgestellten Rand 14 verbliebene Rest bildet auch hier den die Gabelmündung 11 überbrückenden Steg 13, welcher senkrecht auf den Gabelzungen 12 steht und mit diesen fest verbunden ist. Das Einsetzen eines Dämpfungselementes 6 wie das Befestigen des Befestigungsauges 2 mit der wiederum damit verbundenen Scheibenwischerenlage an einer Fahrzeugkarosserie erfolgt so wie in den bereits beschriebenen Ausführungsbeispielen.

Abschließend soll noch bemerkt sein, daß der Steg 13 nicht einstückig mit dem Befestigungsteil hergestellt sein muß, er kann auch separat hergestellt und dann nachträglich fest mit den Gabelzungen 12, z.B. durch Punktschweißen oder Stumpfschweißen, verbunden sein. Der Steg 13 muß auch nicht am äußeren Rand des Befestigungsauges 2 angeordnet sein, sondern er kann auch etwas vom Rand des Befestigungsauges 2 eingerückt sein.

### Bezugszeichen

- 1: Wischlagergehäuse
- 2: Befestigungsauge
- 3: Zapfen
- 4: Rippe
- 5: Aufnahmeöffnung
- 6: Dämpfungselement
- 7: Durchbruch
- 8: Topfwand
- 9: Ringnut
- 10: Durchbruch
- 11: Gabelöffnung
- 12: Gabelzunge
- 13: Steg
- 14: Rand

## Patentansprüche

1. Befestigungsmittel für eine Scheibenwischeranlage zur geräuschdämpfenden Befestigung von schwingungsbelasteten Teilen einer Scheibenwischeranlage an einer Fahrzeugkarosserie oder Teilen derselben, wobei ein hohlzylindrisches gummielastisches Dämpfungselement (6) mit einer Ringnut (9) im Außenumfang seitlich in ein gabelförmig geöffnetes Befestigungsauge bis in eine Aufnahmeöffnung (5) einschiebbar ist, welches Befestigungsauge (2) mit dem betreffenden Teil der Scheibenwischeranlage verbunden ist, **dadurch gekennzeichnet**, daß ein mit den beiden Gabelzungen (12) des Befestigungsauges (2) verbundener Steg (13) die Gabelöffnung (11) derart überbrückt, daß das Dämpfungselement (6) seitlich durch die Gabelöffnung (11) bis in die Aufnahmeöffnung (5) einschiebbar ist.

2. Befestigungsmittel für eine Scheibenwischeranlage nach Anspruch 1, dadurch gekennzeichnet, daß das Befestigungsauge (2) ein angeformtes Teil eines als Druckgußteil hergestellten Teiles der Scheibenwischeranlage, insbesondere eines Wischlagergehäuses (1) ist, daß das Befestigungsauge (2) topfförmig ausgebildet ist, wobei sich die Aufnahmeöffnung (5) für das Dämpfungselement (6) im Topfboden befindet und daß sich die Gabelöffnung (11) durch die Topfwand (8) hindurch erstreckt, wobei der Steg (13) über der Gabelöffnung (11) von einem Teil der verbliebenen Topfwand (9) gebildet wird.

3. Befestigungsmittel für eine Scheibenwischeranlage nach Anspruch 1, dadurch gekennzeichnet, daß das Befestigungsauge (2) aus Blech hergestellt und mit dem betreffenden Teil der Scheibenwischeranlage fest verbunden ist und daß der Steg (13) ein auf den Gabelzungen (12) befestigtes Blechteil ist.

4. Befestigungsmittel für eine Scheibenwischeranlage nach Anspruch 3, dadurch gekennzeichnet, daß der Steg (13) einstückig zum Befestigungsauge (2) ist und von einem aus der Ebene des Befestigungsauges (2) hochgestellten Abschnitt desselben gebildet ist.

5. Befestigungsmittel für eine Scheibenwischeranlage nach Anspruch 3 oder 4, dadurch gekennzeichnet, daß das Befestigungsauge (2) eine Blechplatte ist, deren einer Rand (14) etwa senkrecht umgebogen ist, und daß sich die Gabelöffnung (11) durch den umgebogenen Rand (14) hindurch erstreckt, so daß der verbleibende Teil des umgebogenen Randes (14) den Steg (13) bildet.

6. Befestigungsmittel für eine Scheibenwischeranlage nach Anspruch 3 oder 4, dadurch gekennzeichnet, daß das Befestigungsauge (2) eine Blechplatte mit einem abschnittweise bogenförmigen, insbesondere kreisbogenförmigen Rand (14) ist, wobei der Rand (14) der Blechplatte zumindest in dem bogenförmigen Abschnitt hochgestellt ist, und daß sich die Gabelöffnung (11) durch diesen bogenförmigen Abschnitt des Randes (14) hindurch erstreckt.

7. Scheibenwischeranlage mit Befestigungsmitteln gemäß einem der Ansprüche 1 bis 6.

## Claims

1. Fixing means for a windshield wiper system for noise-dampening attachment of vibration-loaded components of a windshield wiper system to a vehicle body or parts thereof, wherein a hollow cylindrical, rubber-elastic dampening element (6) with an annular groove (9) on its outside circumference is insertable sideways into a yoked-open fastening eye as far as into a receiving aperture (5), which fastening eye (2) is connected with the respective part of the windshield wiper system,
**characterized** in that a web (13) connected with the two yoke tongues (12) of the fastening eye (2) bridges the yoke opening (11) so that the dampening element (6) is insertable sideways through the yoke opening (11) as far as into the receiving aperture (5).

2. Fixing means for a windshield wiper system as claimed in claim 1,
**characterized** in that the fastening eye (2) is an integrally formed part of a die-cast element of the windshield wiper system, in particular of a wiper bearing housing (1), in that the fastening eye (2) has a cup-shaped design, with the aperture (5) for receiving the dampening element (6) being located in the cup bottom, and in that the yoke opening (11) extends through the cup wall (8), with the web (13) across the yoke opening (11) being formed by a part of the remainder of the cup wall (9).

3. Fixing means for a windshield wiper system as claimed in claim 1,
**characterized** in that the fastening eye (2) is manufactured of sheet metal and is firmly connected with the respective part of the windshield wiper system, and in that the web (13) is a sheet metal part fastened on the yoke tongues (12).

4. Fixing means for a windshield wiper system as claimed in claim 3,
**characterised** in that the web (13) is shaped in one piece with the fastening eye (2) and is formed by means of a section of the same raised out of the plane of the fastening eye (2).

5. Fixing means for a windshield wiper system as claimed in claim 3 or in claim 4,
**characterized** in that the fastening eye (2) is a metal plate, one edge (14) of which is bent in an approximately perpendicular manner, and in that the yoke opening (11) extends through the bent edge (14) so that the remainder of the bent edge (14) forms the web (13).

6. Fixing means for a windshield wiper system as claimed in claim 3 or in claim 4,
**characterized** in that the fastening eye (2) is a metal plate with an edge (14) which, sectionally, has the shape of an arc, in particular of a circular arc, with the edge (14) of the metal plate being raised at least in the arcuate section, and in that the yoke opening (11) extends through this arcuate section of the edge (14).

7. A windshield wiper system with fixing means in accordance with any one of claims 1 through 6.

## Revendications

1. Elément de fixation pour essuie-glace, servant a fixer, d'une manière amortissant les bruits, des parties soumises à des vibrations d'un essuie-glace, sur une carrosserie de véhicule ou des parties de celle-ci, un élément d'amortissement (6) cylindrique creux à élasticité du type caoutchouc pouvant être introduit latéralement, par une gorge annulaire (9) prévue dans le contour périphérique extérieur, dans un anneau de fixation ouvert en forme de fourche, jusque dans une ouverture de logement (5), lequel anneau de fixation (2) est relié à la partie considérée de l'essuie-glace, caractérisé en ce qu'une barrette (13) reliée aux deux branches de fourche (12) de l'anneau de fixation (2) forment un pont par-dessus l'ouverture de fourche (11) de façon que l'élément d'amortissement (6) puisse être introduit latéralement en traversant l'ouverture de fourche (11) jusque dans l'ouverture de logement (5)

2. Elément de fixation pour essuie-glace suivant la revendication 1, caractérisé en ce que l'anneau de fixation (2) est une partie, réalisée au formage, d'une pièce d'essuie-glace se présentant sous forme de pièce obtenue par coulée sous pression, notamment d'un boîtier de palier d'essuie-glace (1), en ce que l'anneau de fixation (2) est réalisé en forme de cuvette, l'ouverture de logement (5) prévue pour l'élément d'amortissement (6) étant située dans le fond de cuvette, et en ce que l'ouverture de fourche (11) s'étend à travers la paroi de cuvette (8), la barrette (13) située par-dessus l'ouverture de fourche (11) étant formée d'une partie de la paroi restante de cuvette (9).

3. Elément de fixation pour essuie-glace suivant la revendication 1, caractérisé en ce que l'anneau de fixation (2) est réalisé en tôle et est relié à demeure à la partie concernée de l'essuie-glace et en ce que la barrette (13) est une pièce en tôle fixée sur les branches de fourche (12).

4. Elément de fixation pour essuie-glace suivant la revendication 3, caractérisé en ce que la barrette (13) est d'une pièce avec l'anneau de fixation (2) et est formée d'une zone pliée d'une manière coudée hors du plan de l'anneau de fixation (2).

5. Elément de fixation pour essuie-glace suivant la revendication 3 ou 4, caractérisé en ce que l'anneau de fixation (2) est une plaquette en tôle dont un bord (14) est plié d'une manière approximativement perpendiculaire et en ce que l'ouverture de fourche (11) s'étend à travers le bord plié (14), de sorte que la partie restante du bord plié (14) constitue la barrette (13).

6. Elément de fixation pour essuie-glace suivant la revendication 3 ou 4, caractérisé en ce que l'anneau de fixation (2) est une plaquette en tôle comportant un bord (14) de forme cintrée dans une zone donnée, notamment en forme d'arc de cercle, le bord (14) de la plaquette en tôle étant plié d'une ma-nière coudée au moins dans la zone de forme cintrée, et en ce que l'ouverture de fourche (11) s'étend à travers cette zone de forme cintrée du bord (14).

7. Essuie-glace comportant un élément de fixation suivant l'une des revendications 1 à 6.
